# EUROPÄISCHE PATENTSCHRIFT

(11) **EP 1 022 199 B1**
(45) Veröffentlichungstag und Bekanntmachung des Hinweises auf die Patenterteilung: **15.06.2005**
(21) Anmeldenummer: 99124828.7
(22) Anmeldetag: 14.12.1999
(51) Int. Cl.: B60R 21/34, B62D 25/10

(54) **Als Fussgängerschutz ausgelegte Kraftfahrzeug-Fronthaube**
Vehicle front hood protecting the pedestrians
Capot avant de véhicule protégeant les piétons

(30) Priorität: 21.01.1999 DE 19902311
(43) Veröffentlichungstag der Anmeldung: 26.07.2000
(60) Teilanmeldung: 04027486.2
(73) Patentinhaber: Volkswagen Aktiengesellschaft, 38436 Wolfsburg (DE)
(72) Erfinder: Siebels, Johann, Dipl.-Phys., 38444 Wolfsburg (DE)

(56) Entgegenhaltungen:
- EP-A- 0 992 418
- EP-A- 1 000 821
- DE-A- 3 611 007
- DE-A- 19 929 048
- FR-A- 2 621 677
- GB-A- 2 341 147
- US-A- 4 598 008
- US-A- 4 950 522

## Beschreibung

Die Erfindung betrifft eine als Fußgängerschutz ausgelegte Kraftfahrzeug-Fronthaube.

In großem Umfange im Einsatz sind Fronthauben, die als wesentliche Bestandteile zwei Bleche, nämlich ein Außenblech und ein als Unterstruktur zu bezeichnendes Innenblech, aufweisen, die an den Haubenrändem miteinander verbunden sind. Derartige Fronthauben lassen sich relativ steif ausführen, wobei zusätzliche Maßnahmen, beispielsweise nach Art von Sollknickstellen, getroffen sein können, die bei einem Frontalcrash eine gezielte Umsetzung von Aufprallenergie in Verformungsarbeit sicherstellen. Während eine derartige bekannte Gestaltung einer Fronthaube primär dem Schutz von Fahrzeuginsassen bei einem Frontalcrash dient, befasst sich die Erfindung mit einer "fußgängerfreundlichen" Ausbildung einer Fronthaube. Bekanntlich sind Fußgänger bei Kollision mit Kraftfahrzeugen besonders gefährdet, da der Vorderwagen eines Kraftfahrzeugs im Vergleich zu einem Fußgänger sehr hart und steif ist. Insbesondere besteht die Gefahr, dass beim Aufprall eines Fußgängers von oben auf die Fronthaube des Fahrzeugs schwere Kopfverletzungen entstehen, da die Fronthaube, wie dargelegt, steif ausgelegt ist und demgemäß erst bei großer Aufprallenergie verformt wird.

Die prioritätsälteren EP 0 992 418 A2 und 1 000 821 A2 zeigen fußgängerfreundliche Fronthauben mit einer zwischen einer oberen Deckschale und einer Unterstruktur angeordneten Zwischenschicht aus deformierbaren Material zum Zwecke des Fußaänaerschutzes. Auch die US-PS 4,598,008 und 4,950,522 befassen sich mit sandwichartig aufgebauten Hauben. Dieser Stand der Technik berücksichtigt aber nicht eine dadurch gegebene Erschwerung des Problems des Fußgängerschutzes, d.h. des Schutzes eines Fußgängers bei Kollision mit dem Kraftfahrzeug, dass die entsprechenden Schutzmaßnahmen für unterschiedlich große Fußgänger, nämlich Kinder und Erwachsene, wobei die Erwachsenengröße ebenfalls variiert, unterschiedlich ausgelegt sein müssen.

Der Erfindung liegt die Aufgabe zugrunde, eine gattungsgemäße Kraftfahrzeug-Fronthaube zu schaffen, die einerseits bei betriebsbedingten Belastungen, insbesondere Öffnen und Schließen der Haube, in keiner Weise deformiert wird, so dass keine sichtbaren Veränderungen entstehen, die aber andererseits bei Kollision mit einem Fußgänger die Aufprallenergie in Verformungsarbeit umsetzend wirkt und dabei eine Anpassung an die Verhältnisse bei unterschiedlich großen Fußgängern bewirkt. Dabei ist insbesondere an Kinder und Erwachsene gedacht, jedoch fallen unter den Begriff "Fußgänger unterdurchschnittlicher Größe" auch sehr kleine erwachsene Personen. Zu dieser bildhaften Beschreibung der unterschiedlich großen Fußgänger wurden berelts im Report der Arbeitsgruppe "EEVC Working Group 17" des European Enhanced Vehlcle-Safety Committee konkrete Testbedingungen definiert, um dem Anwender eine Hilfestellung zur Auslegung der Kraftfahrzeug-Fronthaube zu geben.

Die erfindungsgemäße Lösung dieser Aufgabe besteht in den kennzeichnenden Merkmalen des Hauptanspruchs, vorteilhafte Ausführungsformen der Erfindung beschreiben die Unteransprüche.

Wie im Hauptanspruch im einzelnen zum Ausdruck gebracht, ist durch entsprechende Wahl der Steife der verschiedenen Bestandteile der Fronthaube dafür gesorgt, daß im normalen Betrieb des Fahrzeugs, also unter den üblichen Beanspruchungen der Fronthaube, praktisch keine Verformung derselben - weder bleibende Verformung noch sichtbare elastische Verformung - auftritt, so daß die erfindungsgemäße Fronthaube alle im Betrieb an eine Fronthaube zu stellenden Anforderungen erfüllt. Andererseits ist aber infolge der "schwimmenden" Lagerung der Deckschale allein über die deformierbare Zwischenschicht an der Unterstruktur die Möglichkeit geschaffen, daß beim Aufprall eines Fußgängers auf die Deckschale diese unter Zusammenstauchung der Zwischenschicht in Richtung auf die Unterstruktur etwas nachgibt, so daß ein Deformationsweg geschaffen ist und die gewünschte Umsetzung von kinetischer Energie (Aufprall des Fußgängers auf die Deckschale) in Verformungsarbeit (Stauchen der Zwischenschicht) erfolgt. Dabei bleibt, zumindest sofern es sich um kleine Fußgänger handelt, die Unterstruktur in ihrer Form unverändert, so daß sie eine starre Auflage für Zwischenschicht und Deckschale bildet. Handelt es sich aber um einen großen Fußgänger, so erfolgt nach Beendigung des Deformationswegs der Zwischenschicht nicht ein starres Auffangen des Kopfes, sondern ein nachgiebiges Auffangen durch Deformation der Unterstruktur, allerdings mit einer erheblich steileren Kraft-Weg-Kennung. Während also - sofern die Deckschale nicht in Daformationsbereiche unterteilt ist - beim Kopfaufprall eines kleinen Fußgängers keinerlei bleibende Deformation der Fronthaube auftritt, ist bei der Erfindung zum Schutz beim Kopfaufprall eines großen Fußgängers eine bleibende Deformation der Unterstruktur vorgesehen.

Verständlicherweise ist es zum Insassenschutz auch möglich, in an sich bekannter Weise die Unterstruktur mit quer zur Fahrzeuglängsachse verlaufenden Sollknickstellen zu versehen, so daß sie sich beim Crash zusammenfaltet und dadurch ein Eindringen des rückwärtigen Endes der Fronthaube in den Fahrzeuginnenraum vermieden ist.

Mehrere Ausführungsbeispiele der Erfindung werden im folgenden anhand der Zeichnung erläutert. Es zeigen:
- Figur 1: einen Querschnitt durch den Vorderbau eines Kraftfahrzeugs, das mit der erfindungsgemäßen Fronthaube ausgerüstet ist,
- Figur 2: vergrößert die in Figur 1 bei II herausgehobene Einzelheit,
- Figur 3: eine andere Ausbildung der Einzelheit II,
- Figur 4: eine weitere Ausführungsform der Erfindung im Querschnitt durch das Fahrzeug,
- Figur 5: die in Figur 4 bei V herausgehobene Einzelheit, die Figuren 6, 7, 8 und 9 in Querschnitten durch das Fahrzeug weitere mögliche Ausgestaltungen der Erfindung,
- Figur 10: im Querschnitt und
- Figur 11: in der in Figur 10 mit Xl-Xl bezeichneten Schnittansicht eine weitere Ausgestaltung und die Figuren 12 und 13 in Querschnitten durch das Fahrzeug spezielle Ausgestaltungen der Unterstruktur und der Deckschicht.

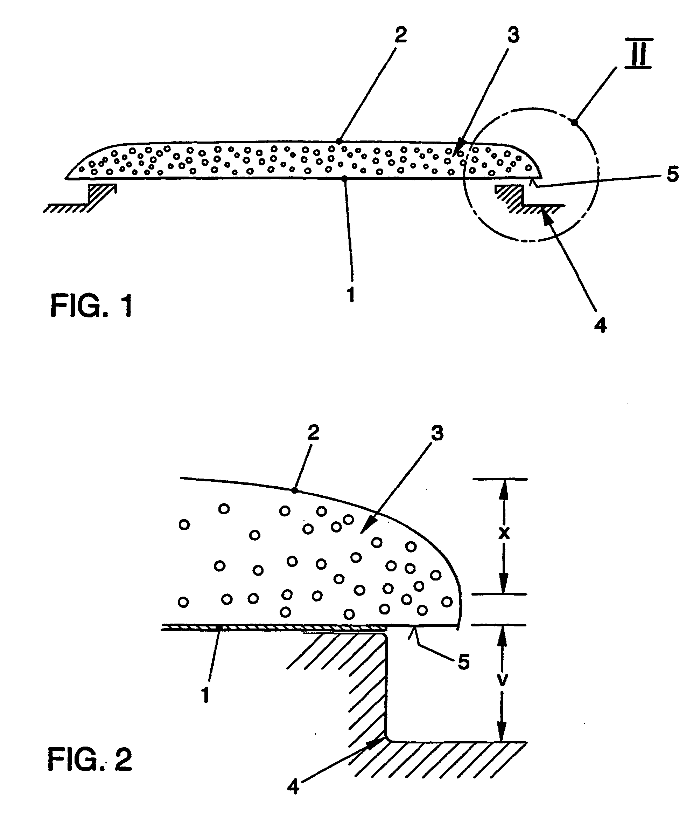

Betrachtet man zunächst die Figuren 1 und 2, so erkennt man unschwer den grundsätzlichen Aufbau der Fronthaube aus der steifen Unterstruktur 1, der ebenfalls eine bestimmte Steife besitzenden Deckschale 2 und der energieabsorbierenden Zwischenschicht 3, die die Deckschale 2 indirekt mit der Unterstruktur 1 verbindet.

Zur Halterung der also aus den drei Schichten 1, 2 und 3 zusammengesetzten Fronthaube am Fahrzeugaufbau 4 dienen in bekannter Weise Scharniere und eine Schloßanordnung; die entsprechenden Beschläge sind frontklappenseitig bevorzugt an der Unterstruktur 1 befestigt. Sie sind, da bestens bekannt, figürlich nicht dargestellt. Entscheidend ist aber, daß durch diese Wahl der Anlenkungsstellen der Beschläge und das Fehlen direkter Berührungen zwischen Deckschale 2 und Unterstruktur 1 die Deckschale 2 an der Unterstruktur 1 gleichsam "schwimmend" über die Zwischenschicht 3 gelagert ist.

Wie besonders deutlich aus Figur 2 ersichtlich, muß zumindest dann, wenn die Deckschale 2 die Zwischenschicht 3 seitlich übergreifend geformt ist, im Fahrzeugaufbau 4 Freigang V solcher Größe vorgesehen sein, daß die Ränder der Deckschale 2 beim Aufprall eines Fußgängers unter Zusammenstauchen der Zwischenschicht 3 um den Deformationsweg x nach unten wandern können, ohne daß eine Abstützung dieser Ränder am Fahrzeugaufbau erfolgt.

An dieser Stelle sei eingefügt, daß - was als Vorteil zu bewerten ist - als Materialien für die harten Teile der Fronthaube, also die Teile 1 und 2, an sich bewährte Werkstoffe eingesetzt werden können, beispielsweise Stahl, Aluminium, Kunststoffe und Verbundwerkstoffe, insbesondere Faserverbundwerkstoffe. Alle diese Materialien können auch in beliebigen Kombinationen für die verschiedenen schalenförmigen Bestandteile der Haube vorgesehen sein.

In dem bisher behandelten Ausführungsbeispiel (Figuren 1 und 2) ist als Material für den Aufprallenergieabsorber, d.h. die energieabsorbierende Zwischenschicht 3, ein Schaumstoff gewählt. Hierbei kann es sich um bekannte Kunststoffschäume, z.B. auf Polyurethan- oder Polypropylen-Basis, handeln. Diese Materialien können in Situ eingeschäumt und verklebt oder als Formteil vorgeformt und dann eingeklebt bzw. partiell mechanisch mit einem schalenförmigen Bestandteil der Fronthaube verklammert werden. Als Schaumdichte empfiehlt sich eine solche von 20 g/l bis 90 g/l. Einsatz finden können auch Metallschäume, insbesondere Aluminiumschäume, mit einer Schaumdichte von 50 g/l bis 300 g/l und einer Porenweite von maximal etwa 20 % der Dicke der Zwischenschicht 3. Derartige Aluminiumschäume können schmelzmetallurgisch hergestellt werden; die Formgebung kann zum Teil beim Abziehprozeß erfolgen, so daß eine mechanische Endbearbeitung erforderlich wird. Als Fügetechnik empfiehlt sich Kleben, Schweißen, z.B. Laserschweißen, Verschrauben und Verklammem.

Wie diese Aufzählungen erkennen lassen, ist die Erfindung nicht auf bestimmte Materialien und Herstellverfahren angewiesen.

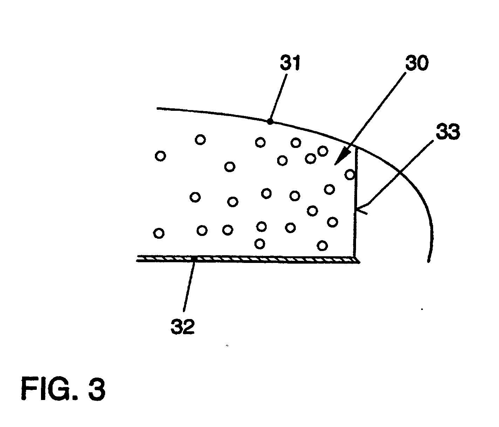

Auch in dem Ausführungsbeispiel nach Figur 3 ist die Zwischenschicht 30, die also einen zwischen der Deckschale 31 und der Unterstruktur 32 liegenden Energieabsorber bildet, aus Schaumstoff hergestellt. Während aber in dem Ausführungsbeispiel nach den Figuren 1 und 2 die Zwischenschicht 3 eine horizontale untere Begrenzung 5 aufweist, liegt die entsprechende Begrenzung 33 der Zwischenschicht 30 in Figur 3 senkrecht, so daß seitlich zwischen ihr und dem abgebogenen Randbereich der Deckschale 31 ein rinnenartiger Freiraum verbleibt.

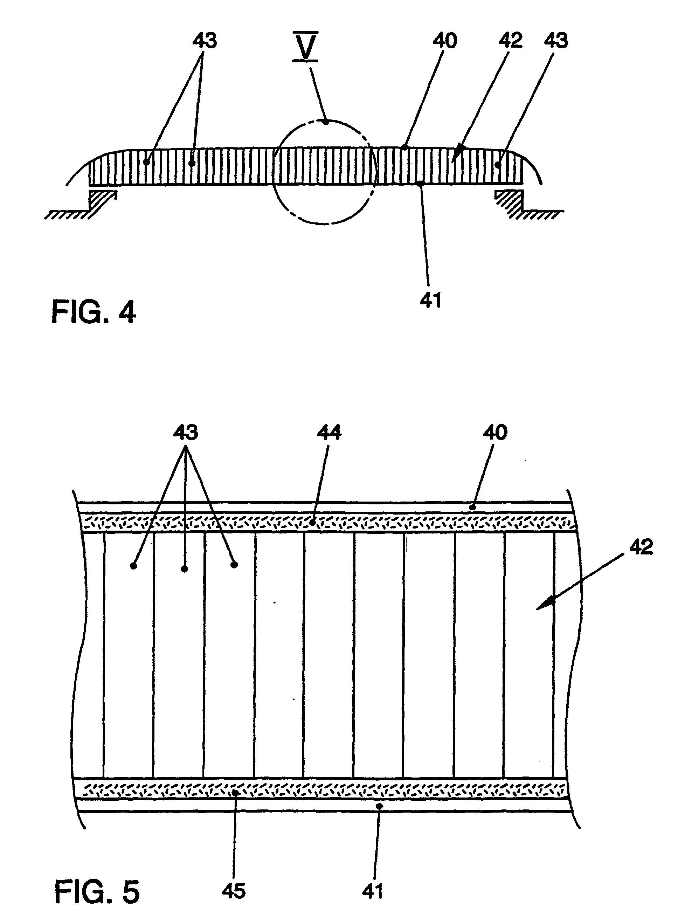

Die Figuren 4 und 5 zeigen nun eine Ausführungsform der Erfindung, bei der zwischen der Deckschale 40 und der Unterstruktur 41 eine energieabsorbierende Zwischenschicht 42 aus einer Vielzahl von parallel und senkrecht verlaufenden Waben 43 vorgesehen ist. Diese Waben, die beliebige Querschnitte, beispielsweise Polygonquerschnitte, runde Querschnitte oder elliptische Querschnitte, besitzen können, brechen bei einer bestimmten von oben auf die Fronthaube wirkenden Kraft (Kopfaufprall) zusammen und schaffen so eine Nachgiebigkeit über einen Deformationsweg, der wiederum weitgehend vom senkrechten Abstand der Deckschale 40 von der Unterstruktur 41 abhängt. Um diesen Abstand nicht zu groß werden zu lassen, ist die Steife der Unterstruktur 41 so gewählt, daß dann, wenn der Deformationsweg der Zwischenschicht 42 erschöpft ist, eine bleibende Verformung der Unterstruktur 41 und dadurch eine Umsetzung von kinetischer Energie in Verformungsarbeit erfolgt. Während also der Deformationsweg der Zwischenschicht 42 ausreicht, um - bis zu einer maximalen Aufprallgeschwindigkeit des Fahrzeugs auf den Fußgänger - bei einem Kind gefährliche Kopfverletzungen zu vermeiden, ruft der Kopf eines erwachsenen Fußgängers zusätzlich eine bleibende Verformung der Unterstruktur 41 hervor. Dies gilt übrigens für alle beschriebenen Ausführungsbeispiele der Erfindung.

Besonders zweckmäßig ist eine solche Auslegung der erfindungsgemäßen Fronthaube, daß sich eine rechteckförmige Deformationskennung (Kraft über Deformationsweg) während der Deformation der Zwischenschicht 42 ergibt.

In Figur 5 sind bei 44 und 45 Schaumkleberschichten dargestellt, die in diesem Ausführungsbeispiel sich zwischen der Zwischenschicht 42 einerseits und den beiden schalenartigen Bestandteilen 40 und 41 der Fronthaube erstrecken und dazu dienen, gefährliche Kraft- oder Spannungsspitzen bei Beginn der Deformation der Zwischenschicht 42 zu vermeiden.

Als Wabenmaterial kann Aluminium mit einer Dichte von 10 bis 80 g/l und einer lichten Weite von 5 bis 20 mm Einsatz finden. Auch Papier, gegebenenfalls mit Kunststofftränkung, oder Kunststoff, beispielsweise auf Polypropylen-Basis, kann Einsatz finden; dann wird man eine lichte Weite von 5 bis 40 mm bzw. 5 bis 10 mm verwenden. Wie bereits angedeutet, kann eine sehr unterschiedliche Wabengeometrie Verwendung finden, beispielsweise mit sechseckigem oder rechteckigem Querschnitt; auch gesickte Vielecke, die zwei oder dreidimensional verformbar sind, sowie röhrchenförmige Waben sind denkbar. Das Fügen kann, wie bereits erwähnt, unter Verwendung von Schaumkleber erfolgen; auch andere Kleber, Schweißfügungen, Lötfügungen usw. können Einsatz finden.

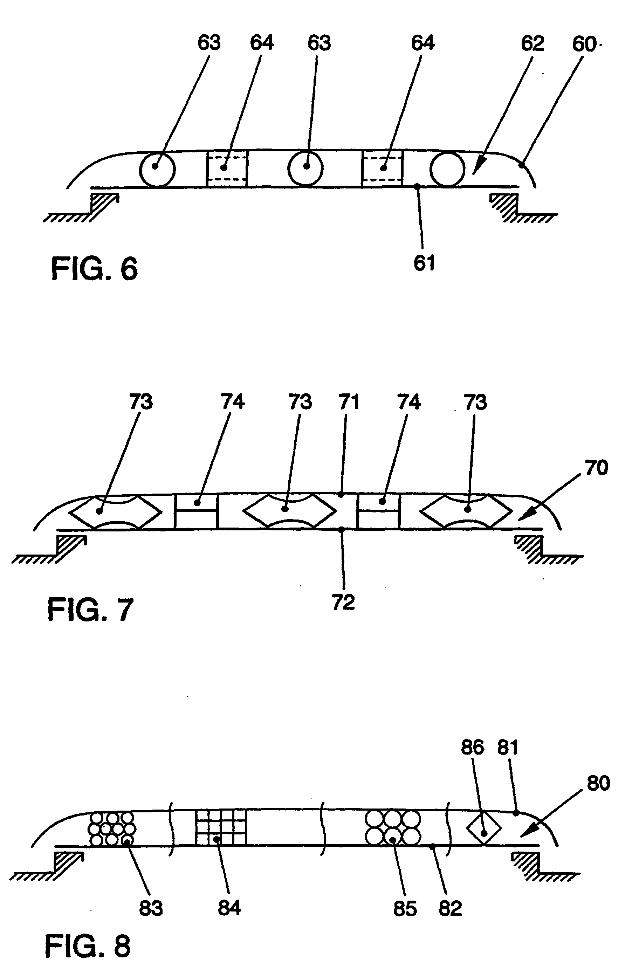

Im Zusammenhang hiermit stehen die Ausführungsformen der Erfindung nach den Figuren 6 bis 9. Betrachtet man Figur 6, so dienen als zwischen der Deckschale 60 und der Unterstruktur 61 vorgesehene Zwischenschicht 62 zylindrische Rohrabschnitte 63 (ausgerichtet in Fahrzeuglängsrichtung) und 64 (ausgerichtet in Fahrzeugquerrichtung). In Figur 7 wird die Zwischenschicht 70 gebildet durch zwischen Deckschale 71 und Unterstruktur 72 angeordnete vorverformte Rechteckrohre 73 und 74. Auch sie sind wiederum unterschiedlich ausgerichtet.

Figur 8 läßt erkennen, daß zur Bildung der Zwischenschicht 80 - die Deckschale ist mit 81, die Unterstruktur mit 82 bezeichnet ― über die Ausdehnung der Zwischenschicht 80 unterschiedliche Konfigurationen vorgesehen sein können, beispielsweise mit unterschiedlichen Durchmessern, unterschiedlicher Geometrie, unterschiedlichen Schichtungsfolgen. Derartige zwischenschichtbildende Anordnungen sind mit 83, 84, 85 und 86 bezeichnet. Zusätzlich zu den bereits erwähnten Materialien kann auch Flexrohr oder Papierrohr mit radialer Verformung Einsatz finden.

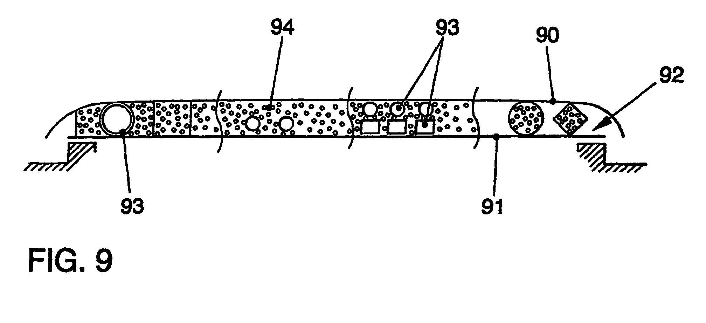

Figur 9 schließlich stellt insofern eine Weiterbildung der Ausführungsform nach Figur 8 dar, als die sich wiederum zwischen der Deckschale 90 und der Unterstruktur 91 erstreckende Zwischenschicht 92 durch eine Kombination dauernd verformbarer Teile, von denen nur eines mit 93 bezeichnet ist, mit Schaumstoff 94 gebildet ist. Auf diese Weise lassen sich beliebige Kombinationen zur Einstellung der Verformungskennung beim Kopfaufprall schaffen.

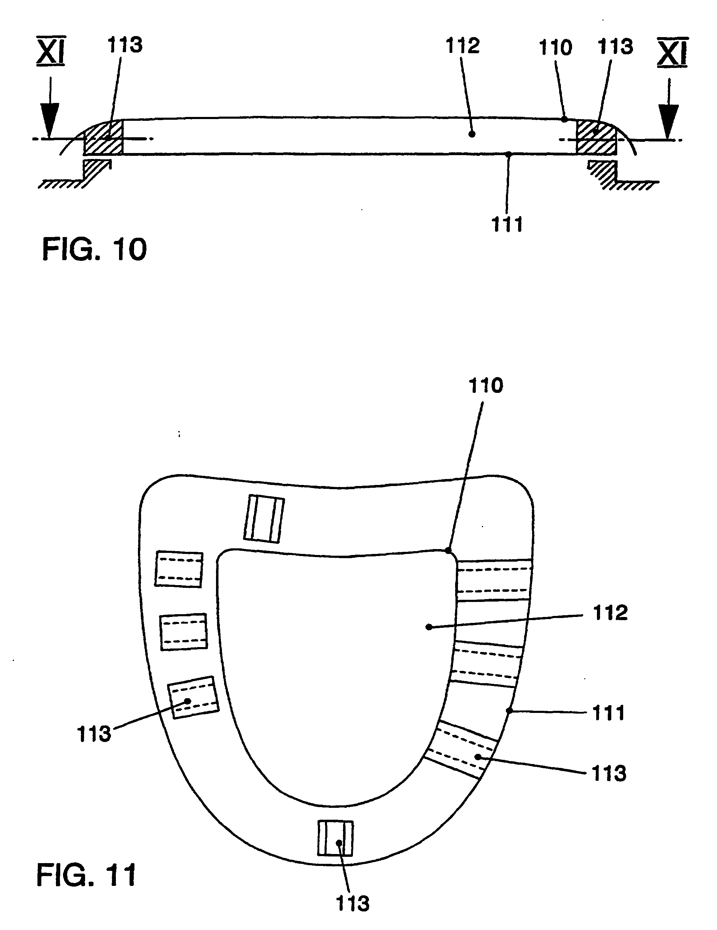

Als wesentliches Merkmal der Erfindung war hervorgehoben, daß die Deckschale - in den Figuren 10 und 11 mit 110 bezeichnet - nicht unmittelbar durch Aufliegen von der Unterstruktur 111 getragen sein darf, da andernfalls beim Kopfaufprall die Zwischenschicht 112 nicht zusammengedrückt werden würde. Wie in den Figuren 10 und 11 dargestellt, kann es aber zweckmäßig sein, zum Auffangen von Schubbeanspruchungen im normalen Fahrzeugbetrieb und zur Unterdrückung dieser Beanspruchungen beim Fußgängeraufprall Randbereiche umlaufend oder partiell mit Abstützungen 113 zu versehen, die beispielsweise aus einem Schaummaterial erhöhter Dichte bestehen.

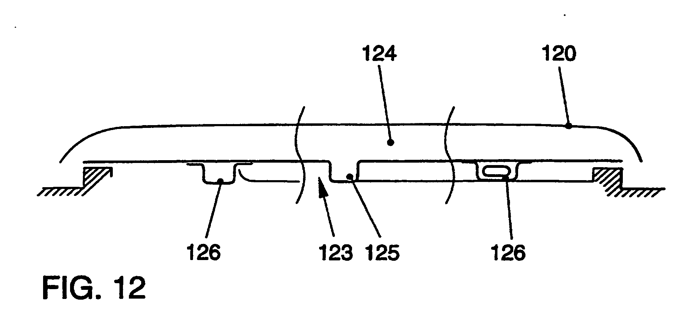

Wie bereits ausgeführt, soll die Unterschale erst dann deformiert werden, wenn die Deckschale (in Figur 12 mit 120 bezeichnet) von oben her mit einer relativ großen Kraft beaufschlagt wird, wie sie beispielsweise der Kopf eines erwachsenen Fußgänger ausübt. Figur 12 zeigt daher eine steife Ausbildung der Unterstruktur 123 (oberhalb der sich verständlicherweise wieder die deformierbare Zwischenschicht 124 befindet): Zur Versteifung sind in diesem Ausführungsbeispiel längsverlaufende Sicken 125 und aufgesetzte Rippen 126 und 127 unterschiedlicher Ausbildung und unterschiedlicher Materialien vorgesehen.

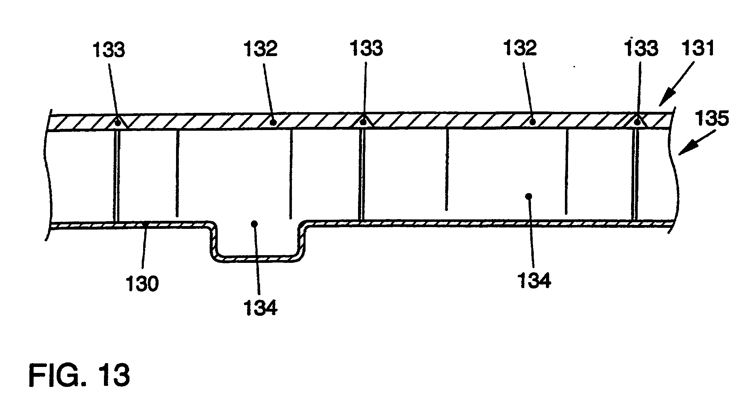

Figur 13 schließlich verwendet ebenfalls eine verrippte Unterstruktur 130, jedoch ist in diesem Ausführungsbeispiel die Deckschale 131 in Deformationsbereiche 132 mittels örtlicher Materialschwächungen 133 (die von oben her nicht erkennbar sind) unterteilt, wobei jeder Deformationsbereich 132 für sich steif ist und beim örtlichen Kopfaufprall unter Trennung in den Zonen 133 gleichsam selbständig nach unten unter Kompression des ihm jeweils zugeordneten Elements 134 der allgemein mit 135 bezeichneten Zwischenschicht bewegt wird. Hier kommt es also durch Abreißen einzelner Deformationsbereiche 132 zu einer nur partiellen Verformung der Zwischenschicht 135 und damit auch nur zu einer örtlich partiellen Energieumsetzung. Der Vorteil dieser Ausführungsform der Erfindung ist in einer möglichen höheren Festigkeit oder Steife der Zwischenschicht 135 gegenüber der bisher behandelten Gesamtverformung der Zwischenschicht beim Kopfaufprall zu sehen.

Die Steife der Deckschalenbereiche 132 hat zur Folge, daß auch bei örtlicher Beanspruchung einzelner Bereiche das gesamte jeweils unter ihnen liegende Element 134 der Zwischenschicht 135 zur Verformung herangezogen wird. Insofern liegt eine Analogie zu den vorher beschriebenen Ausführungsbeispielen der Erfindung vor, bei denen infolge der Steife der Deckschale auch bei örtlicher Beanspruchung derselben die gesamte Zwischenschicht zur Deformation herangezogen wurde.

Mit der Erfindung ist demgemäß eine gattungsgemäße Kraftfahrzeug-Fronthaube geschaffen, die die unterschiedlichen Erfordernisse beim Aufprall des Fahrzeugs auf Fußgänger unterschiedlicher Größen mit einfachsten Mitteln berücksichtigt.

## Patentansprüche

1. Als Fußgängerschutz ausgelegte Kraftfahrzeug-Fronthaube, **gekennzeichnet durch** eine schalenartige Struktur mit drei Schichten, die eine
- steife Unterstruktur (1) zur Aufnahme von Scharnieren und einer Schlossanordnung,
- eine Deckschale (2) und
- eine energleabsorbierende Zwischenschicht (3) enthält, die beim Aufprall eines Fußgängers auf der Deckschale (2) deformierbar ist, so dass die Dockschale (2) unter Bildung eines Deformationsweges (x) in Richtung auf die Unterstruktur (1) verlagerbar ist,
wobei die Deckschale (2) schwimmend indirekt über die Zwischenschicht (3) an der Unterstruktur (1) gelagert und die Zwischenschicht (3) seitlich übergreifend geformt ist derart, dass die Deckschale (2) nach Einbau der Fronthaube einem Fahrzeugaufbau unter Belassung eines Freiganges (V) zur Sicherstellung des Deformationsweges (x) gegenübersteht, wobei erst nach Beendigung des Deformationsweges (x) eine Deformation der Unterstruktur (1) mit einer erheblich steileren Kraft-Weg-Kennung erfolgt.

2. Fronthaube nach Anspruch 1, **dadurch gekennzeichnet, daß** die Unterstruktur (123) Versteifungen nach Art von Sicken (125) und Rippen (126) aufweist.

3. Fronthaube nach Anspruch 1 oder 2, **dadurch gekennzeichnet, daß** die Zwischenschicht (92) Kunststoff- und/oder Metallschäume (94) enthält.

4. Fronthaube nach einem der Ansprüche 1 bis 3, **dadurch gekennzeichnet, daß** die Zwischenschicht (92) Deformationsprofile (93) enthält.

5. Fronthaube nach einem der Ansprüche 1 bis 4, **dadurch gekennzeichnet, daß** zwischen der Deckschale (40) und/oder der Unterstruktur (41) einerseits und der Zwischenschicht (42) andererseits ein Spannungsspitzen bei Verformungseinleitung vermeidender Schaumkleber (44, 45) vorgesehen ist.

6. Fronthaube nach einem der Ansprüche 1 bis 5, **gekennzeichnet durch** über den Verlauf der Zwischenschicht (92) unterschiedliche Auslegung derselben.

7. Fronthaube nach einem der Ansprüche 1 bis 6, **gekennzeichnet durch** Schubbeanspruchungen aufnehmende örtliche Abstützungen (113) zwischen Deckschale (110) und Unterstruktur (111).

## Claims

1. Vehicle front bonnet protecting pedestrians, **characterized by** a shell-like structure with three layers which comprise
- a stiff substructure (1) for accommodating hinges and a lock arrangement,
- a top shell (2) and
- an energy-absorbing intermediate layer (3) which is deformable if a pedestrian impacts against the top shell (2), so that the top shell (2) can be shifted in the direction of the substructure (1) forming a deformation travel (x),
the top shell (2) being mounted indirectly via the intermediate layer (3) in a floating manner on the substructure (1) and the intermediate layer (3) being formed in a manner such that it engages laterally over it such that the top shell (2), after the front bonnet has been installed, lies opposite a vehicle body with a passage (V) being left in order to ensure the deformation travel (x), with, only after the deformation travel (x) is finished, a deformation of the substructure (1) taking place with a considerably steeper force/travel characteristic.

2. Front bonnet according to Claim 1, **characterized in that** the substructure (123) has stiffening in the manner of beads (125) and ribs (126).

3. Front bonnet according to Claim 1 or 2, **characterized in that** the intermediate layer (92) contains plastic foams and/or metal foams (94).

4. Front bonnet according to one of Claims 1 to 3, **characterized in that** the intermediate layer (92) contains deformation profiles (93).

5. Front bonnet according to one of Claims 1 to 4, **characterized in that** a foaming adhesive (44, 45) avoiding stress concentrations during the initiation of deformation is provided between the top shell (40) and/or the substructure (41), on the one hand, and the intermediate layer (42), on the other hand.

6. Front bonnet according to one of Claims 1 to 5, **characterized by** a different configuration of the intermediate layer (92) over the extent thereof.

7. Front bonnet according to one of Claims 1 to 6, **characterized by** shearing-stress-absorbing local supports (113) between the top shell (110) and substructure (111).

## Revendications

1. Capot avant de véhicule automobile conçu pour protéger les piétons, **caractérisé par** une structure de type coque à trois couches, qui comprend :
- une sous-structure rigide (1) pour recevoir des charnières et un dispositif de verrouillage,
- une coque de couverture (2) et
- une couche intermédiaire absorbant l'énergie (3), qui peut se déformer lors de l'impact d'un piéton sur la coque de couverture (2), de sorte que la coque de couverture (2) puisse se déplacer dans la direction de la sous-structure (1) en produisant une course de déformation (x),
la coque de couverture (2) étant montée de manière à flotter indirectement sur la sous-structure (1) par le biais de la couche intermédiaire (3), et la couche intermédiaire (3) étant formée pour venir en prise latéralement par le dessus de telle sorte que la coque de couverture (2), après le montage du capot avant, soit en regard d'une carrosserie de véhicule en laissant un passage libre (V) pour assurer la course de déformation (x), une déformation de la sous-structure (1) n'ayant lieu qu'après l'achèvement de la course de déformation (x), avec une caractéristique force-distance considérablement plus raide.

2. Capot avant selon la revendication 1, **caractérisé en ce que** la sous-structure (123) présente des renforcements du type moulures (125) et nervures (126).

3. Capot avant selon la revendication 1 ou 2, **caractérisé en ce que** la couche intermédiaire (92) comprend des mousses de plastique et/ou de métal (94).

4. Capot avant selon l'une quelconque des revendications 1 à 3, **caractérisé en ce que** la couche intermédiaire (92) comprend des profilés de déformation (93).

5. Capot avant selon l'une quelconque des revendications 1 à 4, **caractérisé en ce que** l'on prévoit entre la coque de couverture (40) et/ou la sous-structure (41) d'une part, et la couche intermédiaire (42) d'autre part, une mousse adhésive (44, 45) réduisant les pics de contrainte lors de l'introduction de la déformation.

6. Capot avant selon l'une quelconque des revendications 1 à 5, **caractérisé par** une configuration différente de la couche intermédiaire (92) sur toute son étendue.

7. Capot avant selon l'une quelconque des revendications 1 à 6, **caractérisé par** des supports (113) locaux entre la coque de couverture (110) et la sous-structure (111), recevant les contraintes de poussée.
